**Europäisches Patentamt**

**European Patent Office**

**Office européen des brevets**

(19)

(11) Veröffentlichungsnummer: **0 001 112**
**B1**

(12)

# EUROPÄISCHE PATENTSCHRIFT

(45) Veröffentlichungstag der Patentschrift: **17.06.81**

(21) Anmeldenummer: **78100831.3**

(22) Anmeldetag: **06.09.78**

(51) Int. Cl.³: **E 05 C 3/08, E 05 B 65/14**

(54) **Verschlussvorrichtung für Bordwände von Lastfahrzeugen.**

(30) Priorität: **09.09.77 DE 2740573**

(43) Veröffentlichungstag der Anmeldung:
**21.03.79 Patentblatt 79/6**

(45) Bekanntmachung des Hinweises auf die Patenterteilung:
**17.06.81 Patentblatt 81/24**

(84) Benannte Vertragsstaaten:
**BE CH DE FR GB LU NL SE**

(56) Entgegenhaltungen:
**US - A - 3 124 378**

(73) Patentinhaber: **Emil Dautel Kipperbau**
**Dieselstrasse 30 Postfach 30**
**D-7105 Leingarten (DE)**

(72) Erfinder: **Dautel, Helmut, Dipl.-Ing.**
**Augelbaum 82**
**D-7105 Leingarten (DE)**
Erfinder: **Friedle, Lothar**
**Weinstrasse 5**
**D-7104 Obersulm 3 (DE)**

(74) Vertreter: **Utermann, Gerd, Dipl.-Ing.**
**Kilianstrasse 7 Kilianspassage Postfach 3525**
**D-7100 Heilbronn (DE)**

Courier Press, Leamington Spa, England.

Verschlußvorrichtung für Bordwände von Lastfahrzeugen

Die Erfindung betrifft eine Verschlußvorrichtung für pendel- und/oder klappbare Bordwände, insbesondere Lastkraftwagen und deren Anhänger, mit einem an der oberen Ecke der Bordwand parallel zu deren Schwenkachse angeordneten Bordwandzapfen, der in einem den Bordwandzapfen teilweise umgreifenden in Richtung der Bordwandzapfenbewegungsbahn offenen Gegenlager durch ein unterhalb der Bordwandzapfenendstellung gelagertes, nach unten wegschwenkendes verriegelbares Schwenkstück gehalten ist, dessen Betätigungselemente in dem Raum zwischen der Bordwandseitenkante und der beim Verschwenken von der Bordwandzapfenspitze beschriebenen Ebene untergebracht sind, ein auf das Schwenkstück unmittelbar drückendes Betätigungsorgan und eine eine Totlage geringfügig überschreitenden Verriegelungseinrichtung aufweisen.

Eine derartige Verschlußvorrichtung ist in der DT—C—22 04 112 beschrieben. Diese Konstruktion zeichnet sich dadurch aus, daß das Betätigungsorgan zweiarmig ausgebildet ist und durch seine günstige Anordnung die Schließkräfte sehr gut abstützt. Die Lagerung des Schwenkstückes unter der Bordwandzapfenendstellung hat den Vorteil, daß das Schwenkstück mit seinem Ende unter die Bordwandzapfenbewegungsbahn geschwenkt werden kann und alle Betätigungselemente darunter liegen können und sich somit in einem schmalen Raum von der Breite des Bordwandzapfens direkt neben der Seitenkante der Bordwand unterbringen lassen und daß keine Teile um den Bordwandzapfen seitlich über seine Spitze hinausgehend herumgreifen müssen, wie dies bei anderen Konstruktionen, insbesondere derjenigen nach DT—B—15 80 032 der Fall ist, wo zudem die ganzen Schließkräfte über eine Zugstange abgefangen werden müssen und zwangsweise eine Verriegelungseinrichtung für die gesamte Schließkraft in einem einem Handschwenkhebel benachbarten Lagerelement erfordern. Diese Konstruktion hat zwar schon eine in vertikaler Richtung bewegte Betätigungsstange, jedoch muß sie abgekröpft werden, um den Bordwandzapfen seitlich umgreifen zu können, damit er in der Offen-Stellung unter dem Schließschwenkstück herausbewegt werden kann.

Die zuerst erwähnte Konstruktion nach DT—C—22 04 112 gestattet eine bessere Abstützung der auftretenden Verschlußkräfte und vor allem ein besseres, klapperfreies, ständiges Zuhalten und baut insgesamt schmaler also die nach der DT—B—15 80 032. Bei der Konstruktion ist aber der Handschwenkhebel in unmittelbarer Nähe des Schwenkstücks angelenkt und daher für hochliegende Verschlüsse nicht geeignet, da er dann, selbst wenn er als lange Hebel ausgeführt ist, in öffrender, etwa horizontaler Lage, nicht mehr erreichbar ist. Auch baut die Konstruktion noch verhältnismäßig groß.

Die Bordwandverschlüsse müssen für die praktischen Bedürfnisse jedoch einerseits in einem sehr schmalen Raum untergebracht werden und andererseits insgesamt in der Dicke, einschließlich der Gehäusewandungen nur etwa 40 mm betragen, weil die Differenz zwischen der zulässigen Gesamtbreite eines Fahrzeugaufbaus und den für das Verladen von Paletten erforderlichen Innenmaßen der Bordwände nur einen Raum in dieser Größenordnung zulassen.

Die Erfindung zielt nun darauf ab, hier Verbesserungen zu schaffen, und die eingangs genannte Konstruktion nach der DT—C—22 04 112 insofern zu verbessern, als sie einerseits sowohl schmal als auch sehr dünn gebaut werden kann und andererseits die auftretenden Schließkräfte im Bereich der Bordwandzapfenendstellung abzustützen gestattet, verschiedene Betätigungsmöglichkeiten für die Übertragung von einem Handschwenkhebel auf das Betätigungsorgan insbesondere auch in unterschiedlicher Höhenlage gestattet. Dazu bedient sie sich der an sich bekannten vertikal bewegten Betätigungsstange und sieht eine solche vor und bildet das schon bekannte zweiarmige, etwas abgewinkelte Betätigungsorgan nunmehr als Winkelhebel oder Winkeldruckstück aus, welcher bzw. welches eine weit nach der Außenkante des Fahrzeuges zu liegende Lagerachse und einen nach oben ragende, auf das Schwenkstück drückenden Arm oder Nockenteil aufweist und dessen Angriffsachse für die Betätigungsstange in der Verriegelungsstellung etwa auf der Höhe der Lagerachse im Abstand von dieser in Richtung auf die Ladefläche zu versetzt liegt.

Durch die Ausbildung als Winkelhebel oder Winkeldruckstück mit entsprechender Lage der Kraftangriffspunkte kann eine Abstützung der auftretenden Schließkräfte in unmittelbarer Nähe des Schwenkstückes erfolgen, und es kann eine beliebig lange Betätigungsstange an günstiger Stelle in einfacher Ausführung angeordnet werden. Dadurch daß die Lagerachse weit nach außen liegt, kann der Druckpunkt in der Verschlußstellung senkrecht über dieser Lagerachse oder etwa senkrecht über ihr liegen und bietet dadurch einen günstigen Hebelarm zur Abstützung der Kräfte am Schwenkstück, andererseits liegt die Angriffsachse, die als Angriffszapfen oder nur als Angriffspunkt für die Betätigungsstange ausgebildet sein kann, in einem solchen Bereich, wo die Betätigungsstange bei kleinsten Wegen günstige Verschwenkungen des nach oben ragenden Arms oder Nockenteiles bewirkt; dabei kann die Angriffsachse etwa +/− 20—30° aus der Waagerechten nach unten oder oben liegen, ohne daß die Verhältnisse allzusehr geändert werden, obwohl die genau horizontale Lage kräftemäßig und auch bezüglich der konstruktiven Gestaltung auf dem kleinen Raum die günstigste sein dürfte.

Um ein sofortiges Freikommen des Bordwandzapfens vom Schwenkstück beim Öffnen zu unterstützen, kann man zweckmäßig am Schwenkstück und Winkelhebel bzw. Winkeldruckstück Eingriffelemente für das Zurückziehen des Schwenkstückes vorsehen, beispielsweise von im Verlaufe der Bewegung ineinander zum Eingriff kommenden entsprechend angeordneten Nocken.

Am Schwenkstück oder Winkelhebel bzw. Winkeldruckstück kann man zweckmäßig im Bereich der Druckkraftübertragungsstelle eine drehbare Rolle anordnen, dadurch können der Abrieb verkleinert und die Betätigung erleichtert werden.

Für die Verriegelung kann man die Druckkraftübertragungsstelle am Schwenkhebel oder Winkelhebel bzw. Winkeldruckstück mit einer in der Verriegelungsstellung im Eingriff befindlichen Rastvertiefung ausstatten. Es wird dann eine maximale Andruckstelle kurz vor der Rastvertiefung kurz überfahren und der Winkelhebel bzw. das Winkeldruckstück in dieser Position nach beiden Seiten gesichert. Das Überfahren ist aufgrund der Gesamtelastizität der Konstruktion gegebenenfalls unter Einfügung elastischer Ausgleichsglieder wie Tellerfedern, Kunststoffelemente oder dergleichen zu ermöglichen. Eine solche Anordnung kann zur zusätzlichen Sicherung des Zuweitschwenkens gegebenenfalls einen weiteren Anschlag haben; sie kann jedoch bei entsprechender Ausgestaltung der Rastvertiefung auf einen solchen Anschlag verzichten und benötigt dann auch im Bereich der Handhabe der im wesentlichen vertikal bewegten Betätigungsstange keine entsprechende Verriegelung und ermöglicht hier also eine große Zahl von konstruktiven Ausgestaltungen für die Handhabe.

Eine andere vorteilhafte Gestaltung kann vorsehen, daß Winkelhebel bzw. Winkeldruckstück geringfügig über die Stellung hinausbewegbar ist, in welcher die den größten Abstand von der Lagerachse aufweisende Druckkraftübertragungsstelle des Winkelhebels oder Winkeldruckstückes das Schwenkstück an den Bordwandzapfen andrückt und daß ein Anschlag für die Begrenzung der Schwenkbewegung des Winkelhebels oder Winkeldruckstücks in der Verriegelungsstellung vorgesehen ist. Die Verhältnisse sind im Grunde die gleichen, wie bei einer Rastvertiefung, jedoch wird hier nur in einer Richtung gesichert. In beiden Fällen ist die Verriegelungsstellung so festzulegen, daß nach Überschreiten der Totpunktstellung stets eine zudrückende Kraft auf das Schwenkstück ausgeübt wird.

Die Betätigungsstange kann auf vielerlei Weise in vertikaler Richtung verschoben werden. Eine zweckmäßige Gestaltung sieht im Bereich ihres unteren Endes einen Handschwenkhebel vor, mit dem sie auf die verschiedene Weise gekuppelt sein kann. Solche Handschwenkhebel für Vertikalbetätigungsstangen sind an sich bekannt, jedoch ein zweckmäßiges Element. Die Betätigungsstange kann mit einer Feder nach unten gedrückt werden. Dadurch werden Klappergeräusche vermieden, was schon Sinn der bekannten Konstruktionen mit anderen Maßnahmen war, hier insbesondere dann, wenn die Verriegelung im Bereich des Schwenkstückes und Winkelhebel oder Winkeldruckstück erfolgt, sinnvoll ist. Auch unterstützt die Feder das Öffnen der verriegelten Verschlußvorrichtung. Wenn eine solche Feder vorgesehen ist, kann der Handschwenkhebel mit einem Exzenter oder Nocken ausgestattet sein, auf welchem die Betätigungsstange unter der Kraft der Feder aufliegt. Dabei können Gestaltungen gewählt werden, wie sie in der Figurenbeschreibung erläutert sind. Die Betätigungsstange rüstet man zweckmäßig mit einer Längseinstellschraube aus, um stets einen Kraftschluß zu haben und Abnutzungen sowie Fertigungstoleranzen leicht ausgleichen zu können.

Die Betätigunsstange kann je nach Ausgestaltung von Winkelhebel bzw. Winkeldruckstück und Handschwenkhebelkonstruktion an dem Winkelhebel oder bzw. Winkeldruckstück lose anliegen. Zweckmäßig wird sie jedoch mit diesen zug- und druckfest gekoppelt, vorzugsweise über ein Bolzengelenk. Eine weitere vorteilhafte Gestaltung sieht dann vor, daß auch der Handschwenkhebel formschlüssig gekoppelt ist, daß Handschwenkhebel und Winkelhebel bzw. Winkeldruckstück mittelbar formschlüssig miteinander gekoppelt sind. Auch dafür geben die Zeichnungen und die Figurenbeschreibung vorteilhafte Ausführungsbeispiele an. Weitere Merkmale, Vorteile und Ausgestaltungen der Erfindung sind auch dem nachfolgenden, anhand der Zeichnungen abgefaßten Beschreibungsteil zu entnehmen.

Ausführungsbeispiele der Erfindung werden nachfolgend anhand der Zeichnungen erläutert.

Es zeigen:

Fig. 1, die schematische Teilseitenansicht auf zwei Bordwände eines Lastfahrzeuges mit zwei erfindungsgemäßen Verschlußvorrichtungen;

Fig. 2, einen schematisierten Schnitt längs der Linie 2—2 in Fig. 1;

Fig. 3, einen Vertikalschnitt längs der Linie 3—3 in Fig. 5 durch den oberen Teile der Verschlußvorrichtung, wie sie in den Fig. 1 und 2 nur schematisch dargestellt ist in vergrößerter Darstellung etwa im Maßstab 1:1 in der Verschlußstellung;

Fig. 4, eine der Fig. 3 entsprechende Darstellung im geöffneten Zustand;

Fig. 5, einen Teilseitenansicht auf den oberen Teil der Verschlußvorrichtung gemäß Fiog. 3 als Ansicht in Richtung des Pfeiles 5;

Fig. 6, einen Schnitt längs der mehrfach abgesetzten Linie 6—6 in Fig. 3;

Fig. 7, einen Vertikalschnitt längs der Linie 7—7 in Fig. 8 mit der Seitenansicht des Handschwenkhebels durch ein Ausführungsbeispiel für die Gestaltung des unteren Bereichs der Betätigungselemente der in den Fig. 1 und 2 dargestellten Verschlußvorrichtung;

Fig. 8, einen Vertikalschnitt längs der Linie 8—8 in Fig. 7 mit Ansicht des Handschwenkhebels;

Fig. 9, einen Vertikalschnitt längs der Linie 9—9 in Fig. 10 durch ein weiteres Ausführungsbeispiel der Handschwenkhebelbetätigungselemente der Verschlußvorrichtung nach den Fig. 1 und 2;

Fig. 10, eine Seitenansicht der Handschwenkhebelbetätigungseinrichtung nach Fig. 9 teilweise im Schnitt;

Fig. 11, eine der Fig. 3 entsprechende jedoch etwas vergrößerte Darstellung eines weiteren Ausführungsbeispieles für eine erfindungsgemäße Verschlußvorrichtung.

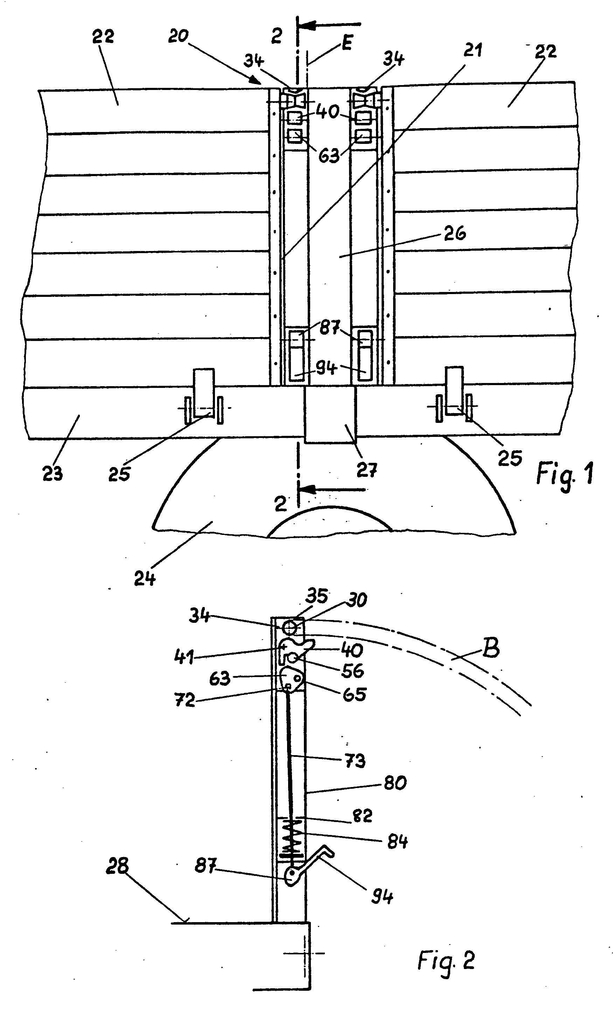

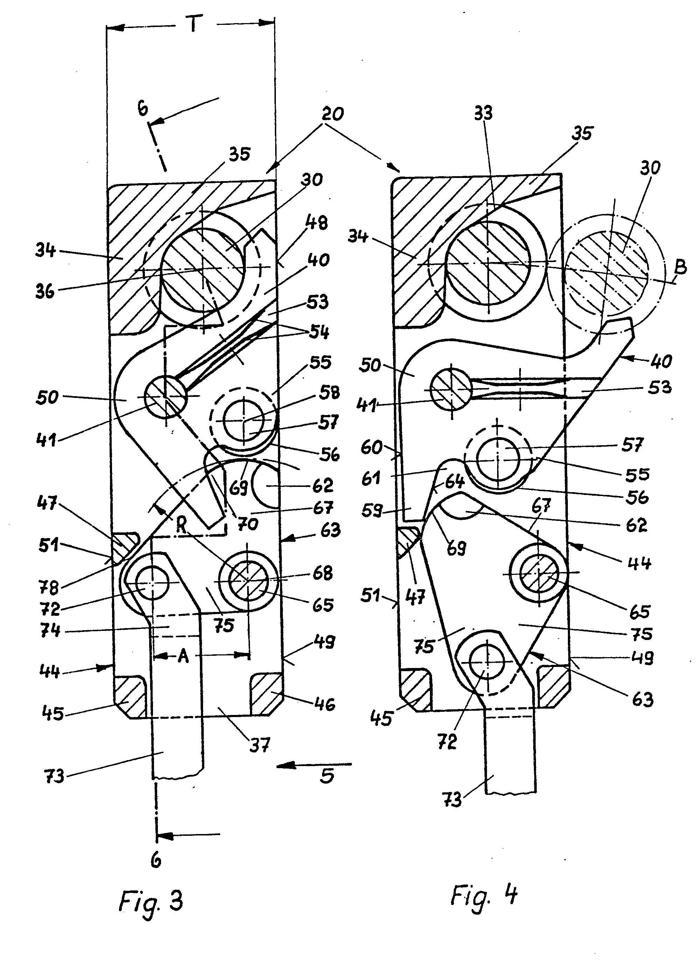

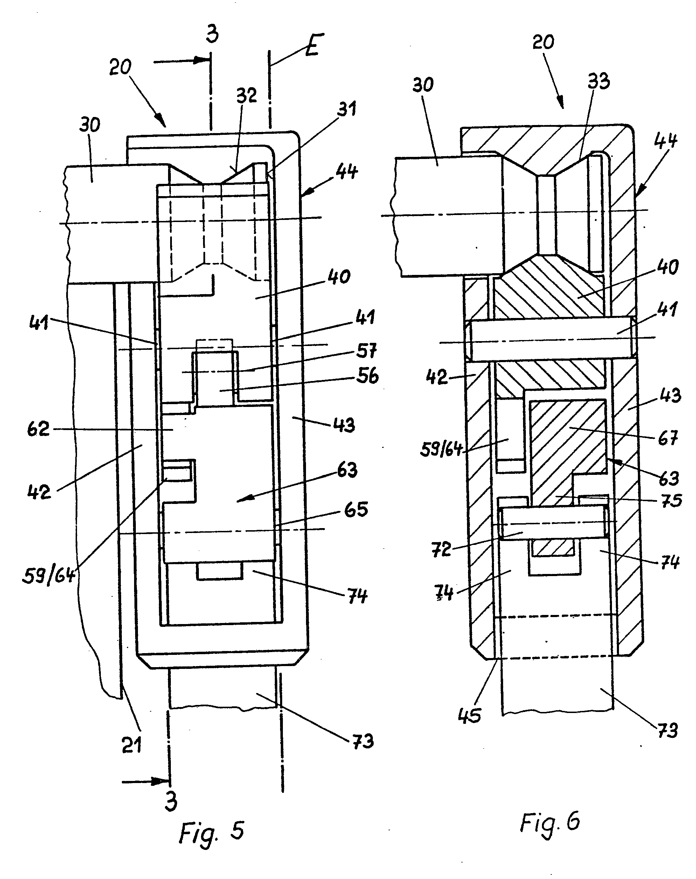

Die erfindungsgemäße Verschlußvorrichtung 20 is neben jeder Seitenkante 21 einer schwenkbaren Bordwand 22 eines Lastfahrzeuges angebracht. Das Lastfahrzeug ist hier nur mit seinem Bodenteil 23 und einem Rad 24 angedeutet. Die beiden Bordwände 22 sind mit üblichen Scharnieren 25 am Bodenteil 23 angelenkt. In das Bodenteil 23 ist eine Mittelrunge 26 in eine entsprechende Halterung 27 eingesteckt. Die Mittelrunge 26 hat an beiden Seiten erfindungsgemäße Verschlußvorrichtungen 20, die den beiden Bordwänden zugeordnet sind. In den oberen Ecken der Bordwände sind über die Seitenkanten 21 hinausstehende, parallel zur Schwenkachse der Scharniere 25 liegende Bordwandzapfen 30 in üblicher Weise befestigt. Die Bordwandzapfenspitze 31 beschreibt bei der Bewegung eine Ebene E. Alle Betätigungsteile liegen zwischen dieser Ebene E und der von der Bordwandseitenkante 21 beschriebenen Ebene in einem schmalen Raum unterhalb des Bordwandzapfens 30. Der Bordwandzapfen 30 ist zur Abstützung von Axialkräften mit einer bekannten doppelkegelförmigen Nut 32 versehen. Diese liegt an einer entsprechend geformten Schulter 33 eines Gegenlagers 34 an. Dieses Gegenlager 34 ist nach oben durch eine Deckwand 35 abgedeckt und ist in Richtung auf die in Fig. 2 dargestellte Bewegungsbahn B offen. Es umgreift den Bordwandzapfen 30 in der Bordwandzapfenendstellung teilweise. Unterhalb der Bordwandzapfenendstellung, deren Mittelpunkt mit 36 bezeichnet ist, ist ein in seinem Prinzip und seiner Funktion bekanntes Schwenkstück 40 angeordnet. Es ist auf einem Lagerzapfen 41 nach unten unter die Bordwandzapfenbewegungsbahn B schwenkbar gelagert. Der Lagerzapfen 41 ist in der linken Seitenwand 42 und der rechten Seitenwand 43 des Verschlußvorrichtungsgehäuses 44 gelagert. Die Seitenwände 42 und 43 des Verschlußvorrichtungsgehäuses 44 sind oben durch die Deckwand 35 verbunden, welche in das sich ebenfalls zwischen beiden Seitenwänden 42 und 43 erstreckende Gegenlager 34 übergeht. Im unteren Bereich der Seitenwände 42 und 43 sind zwischen den Seitenwänden ein hinten liegender Quersteg 45 und ein vorne liegender Quersteg 46 gebildet, zwischen denen eine Betätigungsstangenöffnung 37 freigelassen ist. Ansonsten ist ein sich quer erstreckender Anschlag 47 zwischen den beiden Seitenwänden 42 und 43 vorgesehen. Die übrigen Bereiche der Vorderwand und der Rückwand sind offen, wie es sich aus den Fig. 2 und 3 und 4 ergibt. Das Schwenkstück 40 ist, wie aus Fig. 3 ersichtlich, so geformt, daß es in seiner Anlage- oder Verschlußstellung mit seiner Außenkante 48 mit der vorderen Begrenzungskante 49 des Verschlußvorrichtungsgehäuses 44, die der Außenkante des Fahrzeugs entspricht, fluchtet, während der abgerundete Lagerbereich 50, welcher den Lagerzapfen 41 umgibt, bis nahe an die innere Begrenzungskante 51 reicht. Der Lagerzapfen 41 ist soweit als konstruktiv und festigkeitsmäßig möglich an die innere Begrenzungskante 51 verlegt, um bei einer sehr geringen Tiefe T möglichst günstige Hebelverhältnisse für das Schwenkstück 40 zu erhalten, welches den Bordwandzapfen 30 über einen relativ großen Weg in die Bordwandzapfenendstellung drücken können soll. Das Schwenkstück 40 ist in bekannter Weise mit einem Schlitz 53 versehen, der bis zur Bohrung des Lagerzapfens 41 reicht, und in welchem sich zwei Tellerfedern 54 befinden. Der Lagerungsbereich 50 ist nach Materialstärke und Elastizitätseigenschaften des verwendeten Stahlguß- oder Stahlschmiedewerkstoffes für das Schwenkstück 40 geringsfügig elastisch ausgebildet, so daß unter Berücksichtigung der Tellerfedern die gewünschten und im folgenden noch erläuterten Eigenschaften für ein ständiges klapperfreies Festhalten des Bordwandzapfens 30 erreicht werden. Das Schwenkstück 40 hat unter dem Schlitz 53 liegend einen Druckkraftübertragungsbereich 55. In diesem ist eine drehbare Rolle 56 gelagert, die in der in Fig. 3 dargestellten Verschlußstellung soweit wie möglich außen im Bereich der Kanten 48 und 49 liegt. Ihr Lagerzapfen 57 hat die Achse 58. Ein Nockenfortsatz 59 ist so gestaltet, daß er in der in Fig. 4 dargestellten Verschwenkstellung der Bordwand mit seiner Nockenbegrenzungskante 60 etwa vertikal parallel zur Innenkante 51 des Gehäuses 44 verläuft. Er stellt das an dem Schwenkstück 40 vorgesehene Eingriffselement für das Zurückziehen des Schwenkstückes dar und bildet dafür in dem Raum bis zur Rolle 56 eine Eingriffausnehmung 61, in die ein Rückziehnocken 62 am Winkeldruckstück 63 eingreifen kann, welcher in seiner Form, wie aus dem Fig. 3, 4 und 5 ersichtlich, gestaltet ist und beim Zurückziehen an der Nockenfläche 64 zur Anlage kommen kann. Das Winkeldruckstück 63 ist ein zweiarmiges Winkelbetätigungsorgan für das Schwenkstück 40. Es hat eine Lagerachse 65. Diese ist in den Seitenwänden 42 und 43 befestigt. Ein vorteilhaftes Ausführungsbeispiel ist in seiner Form aus den Fig. 3—6 ersichtlich. Es ist als flaches, fast die ganze Breite der Öffnung des Gehäuses 44 zwischen den Seitenwänden 42 und 43 ausfüllendes Nockenstück von etwa dreieckiger Seitenansicht geformt und hat ein auf das Schwenkstück 40 drückenden, in der in Fig. 3 dargestellten Verriegelungsstellung nach oben ragendes Winkeldruckstückteil 67, dessen von der Drehachse 68 der Lagerachse 65 am weitesten entfernt liegende Druckkraftübertragungsstelle 69 in der Verriegelungsstellung gerade den ihr am nächsten kommenden Punkt der Rolle 56 geringfügig überschritten hat. Im Fig. 3 ist zwecks klarer Darstellung ein Zwischenraum zwischen der Rolle 56 und der Druckkraftübertragungsstelle 69 eingezeichnet, der in Wirklichkeit aber nicht besteht. Die übrigen Teile der Kurvenbahn 70 des Winkeldruckstückteils 67 liegen unterhalb des um die Drehachse 68 gezogenen Kreises mit dem Radius R, welcher durch die Druckkraftübertragungsstelle geht. Sie sind so geformt, daß das Winkeldruckstückteil 67 durch Auftreffen auf die Rolle 56 das Schwenkstück 40 aus der in Fig. 4 dargestellten Bordwandzapfenbewegungsstellung in die in Fig. 3 dargestellte Verschlußstellung bringt, wenn das Winkeldruckstück 63 verschwenkt wird. Die Angriffsachse 72 der Betätigungsstange 73 liegt in der Verschlußstellung — wie aus Fig. 3 ersichtlich — in derselben Höhenlage wie die Drehachse 68 des Winkeldruckstückes 63, sie kann auch aus dieser Höhenlage geringfügig, beispielsweise bis zu 20° oder 30° nach oben oder unten herausgelegt werden. In der dargestellten Form ergibt sich jedoch ein zweiarmiger Winkelhebel, dessen Hebelarme einen Winkel von etwa 90° einschließen. Wie aus den Zeichnungen ersichtlich, ist der Abstand A von der Mitte der Lagerachse 65 zur Angriffsachse 72 so groß wie konstruktiv möglich gewählt und in Richtung auf die Ladefläche 28 bzw. die der Ladefläche 28 zugewandte Kante 51 versetzt, so daß sich optimale Hebelverhältnisse ergeben. Der Gabelkopf 74, welcher den Hebelarm 75, wie aus Fig. 6 ersichtlich, umgreift, trägt die durchgehende Angriffsachse 72. Hier kann je nach konstruktiver Abwandlung auch ein Angriffszapfen oder nur ein Angriffsdruckpunkt in einer Kugelkalotte oder dergleichen gebildet sein. Das richtet sich nach der jeweiligen Handhabungeinrichtung für die Betätigungsstange 73. Der Gabelkopf 74 ist, wie aus den Fig. 3 und 4 ersichtlich, abgekröpft, damit die Betätigungsstange 73 sich zwischen den Querverbindungen 45 und 46 in der Betätigungsstangenöffnung 37 frei bewegen kann. Die ganze Winkeldruckstückanordnung ist derart getroffen, daß die von der Federkraft des am festgehaltenen Bordwandzapfen anliegenden Schwenkhebels 40 ausgelöste Reaktionskraft auf kürzestem Wege mittels der Lagerachse 65 abgestützt wird, während die Betätigungsstange 73 nur die geringfügigen Tangentialkräfte für das Verschwenken und Einnehmen der Verschlußstellung bzw. Verlassen derselben zu übertragen hat. Demgemäß ist auch an geeigneter Stelle ein Anschlag für die Begrenzung der Schwenkbewegung des Winkeldruckstückes 63 vorzusehen. Hier ist er beispielsweise als quer durchgehender Anschlag 47 gezeichnet. Er ist in Fig. 3 mit geringem Abstand zu der Anlagerkante 78 des Winkeldruckstückes 63 gezeichnet, obwohl er in der Natur unmittelbar anliegt. Dieser Anschlag kann auch an sonstiger Stelle zwischen den beiden Hebeln gebildet sein, beispielsweise an den, wie aus den Fig. 5 und 6 ersichtlich, sich nur über einen Teil der Breite der beiden Hebel erstreckenden Eingriffelementen 59 und 62. Der Anschlag kann jedoch auch irgendwo an der Betätigungsstange 73 oder an deren Handhabungseinrichtung gebildet werden. Ein besonderer Vorzug dieser Ausführung ist jedoch, daß eine geschlossene kompakte Hebelkonstruktion in einem Gehäuse 44 geboten wird, die für sich selbst alle auftretenden Verspannkräfte aufnimmt und somit für die verschiedensten Bordwandkonstruktionen und verschiedensten Betätigungseinrichtungen ohne Rücksicht auf die besondere Gestaltung übriger Elemente als Fertigteil und bei entsprechender Gehäuseausbildung sogar als Fertigteil für von rechts oder links eingreifende Bordwandzapfen in großer Stückzahl unverändert gebaut und auf Lager gehalten werden kann.

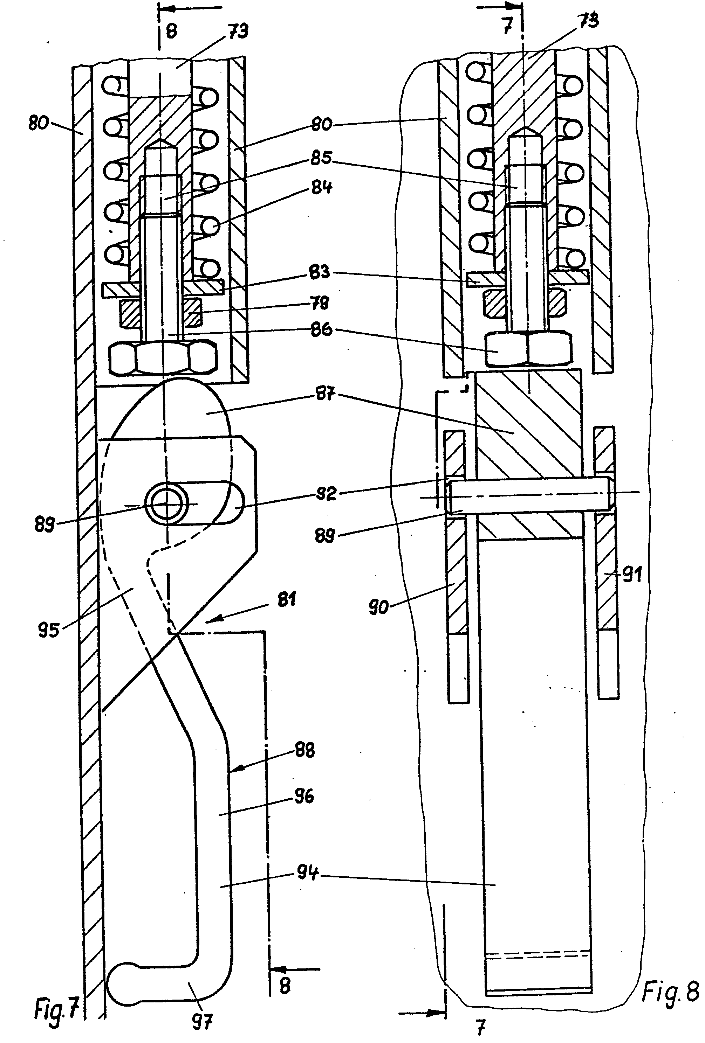

Die vertikal bewegbare Betätigungsstange 73 ist in dem besonders vorteilhaften Ausführungsbeispiel formschlüssig mit dem Winkeldruckstück 63 verbunden; sie kann auf verschiedene Weise von unten gezogen und gedrückt werden, damit sie ihre im wesentlichen vertikal gerichtete Bewegung ausführen kann. Dabei können übliche Verschwenkmechanismen mit Gabelköpfen und Handgriff verwendet werden. Ein besonders vorteilhaftes klapperfreies Ausführungsbeispiel für eine sehr klein bauende und trotzdem gut verriegelnde Handschwenkhebelbetätigungseinrichtung ist in Fig. 2 schematisch und in den Fig. 7 und 8 in Einzelheiten dargestellt. Die Betätigungsstange 73 ist in einem länglichen Betätigungsstangengehäuse 80 mit geschlossenem Querschnitt zwischen dem Gehäuse 44 und dem unteren Handschwenkhebelbereich 81 untergebracht. Sie durchdringt ein Federlager 82 und hat an ihrem unteren Ende eine Federauflagescheibe 83. Zwischen diesen beiden ist eine Druckschrauben feder 84 eingespannt, die die Betätigungsstange 73 nach unten zieht. Im unteren Ende der Betätigungsstange 73 ist eine Gewindebohrung 85 angebracht, in welcher axial verstellbar eine Sechskantkopfeinstellschraube 86 eingeschraubt ist, die mit einer Kontermutter 79 gesichert werden kann. Sie dient zur höheneinstellbaren Übertra-

9
**0 001 112**
10

gung der Druckkraft eines Exzenters oder Nocken 87, der an dem Handbetätigungshebel 88 ausgebildet ist. Die Form des Nockens geht aus Fig. 7 hervor. Der Nocken 87 ist mit einem Lagerzapfen oder Lagerrohr 89 ausgestattet, welches in zwei seitlichen Lagerbocken und zwar einem linken Lagerbock 90 und einem rechten Lagerbock 91 gelagert ist. Dazu sind horizontal liegende Langlöcher 92 vorgesehen, so daß das Lagerrohr 89 sich horizontal bewegen kann. Dadurch wird bei sehr klein bauender Konstruktion einerseits eine leichte Betätigung, andererseits ein ausreichender Weg und vor allem in der in Fig. 7 dargestellten Verschluß-stellung ein Verriegelungseffekt durch Über-schreiten eines Totpunktes ermoglicht. Der Handgriff 94 des Handschwenkhebels 88 ist von seiner hinteren Ansatzstelle 95 am Nocken 87 zunächst schräg nach außen geführt, dann mit einem etwa vertikal liegenden Griffteil 96 und einer unteren Anlageabwinkelung 97 gebildet, so daß man ihn gut greifen und in die in Fig. 2 dargestellte Position schwenken kann, in welcher die Kopfschraube 86 sich auf der Nockenfläche 87 absenkt und dadurch zu einer Absenkung der Betätigungsstange 73 unter der Wirkung der Kraft der Feder 84 führt, so daß das hier kraftschlüssig geführte Ende der Betäti-gungsstange 73 das formschlüssig ange-kuppelte Winkeldruckstück 63 aus der in Fig. 3 dargestellten Lage in die in Fig. 4 dargestellte Lage verschwenkt. Dabei bewegt sich die Druckkraftübertragungsstelle 69 unter der Rolle 56 heraus, das Eingriffselement 62 schlägt gegen das Eingriffselement 59, so daß das Schwenkstück 40 verschwenkt wird und der Bordwandzapfen 30 frei wird, so daß die Bordwand gemäß Fig. 2 um die Schwenkachse des Lagers 25 verschwenkt werden kann und der Bordwandzapfen auf der Bewegungsbahn B aus dem nun offenen Gegenlager 34 herauskommt. Wenn die Handhebel und das Verschwenkstück 40 stören, kann während des Ladevorgangs die Verschlußvorrichtung wieder in die Verschlußstellung gebracht und zum Schließen der Bordwand wieder geöffnet werden.

Wie ersichtlich, sind alle Teile der Betätigungsvorrichtung in dem kleinen, nur 40 mm tiefen Raum in weitgehend geschlossenen Gehäuseteilen gut geschützt und leicht zu betätigen untergebracht. Sie können mit einfachen Mitteln hergestellt, gut montiert und für die verschiedensten Einsatzzwecke leicht angepaßt werden. Die Druckkräfte werden gut abgestützt, die Betätigung ist einfach, die Vorrichtung ist klapperfrei, auch bei Abnutzungen und kann leicht nachgestellt werden. Sie hat keine nach oben oder außen überstehenden Teile, da alle Betätigungselemente in dem Raum zwischen der Bordwandseitenkante und der von der Zapfenspitze beschriebenen Ebene E untergebracht sind. So können, wie in Fig. 1 dargestellt, an einer stabilen und ebenfalls nur dünnen Mittelrunge, ohne viel Ladeöffnung wegzunehmen, zwei Verschlußvorrichtungen angebracht werden. Die Verschlußvorrichtung kann auch an einer Eckrunge nur als einzelnes Element angebracht sein. An einer Eckrunge können auch für Seitenwände und Rückwände im Winkel von 90° zueinander angeordnete Verschlußvorrichtungen der beschriebenen Art vorgesehen werden.

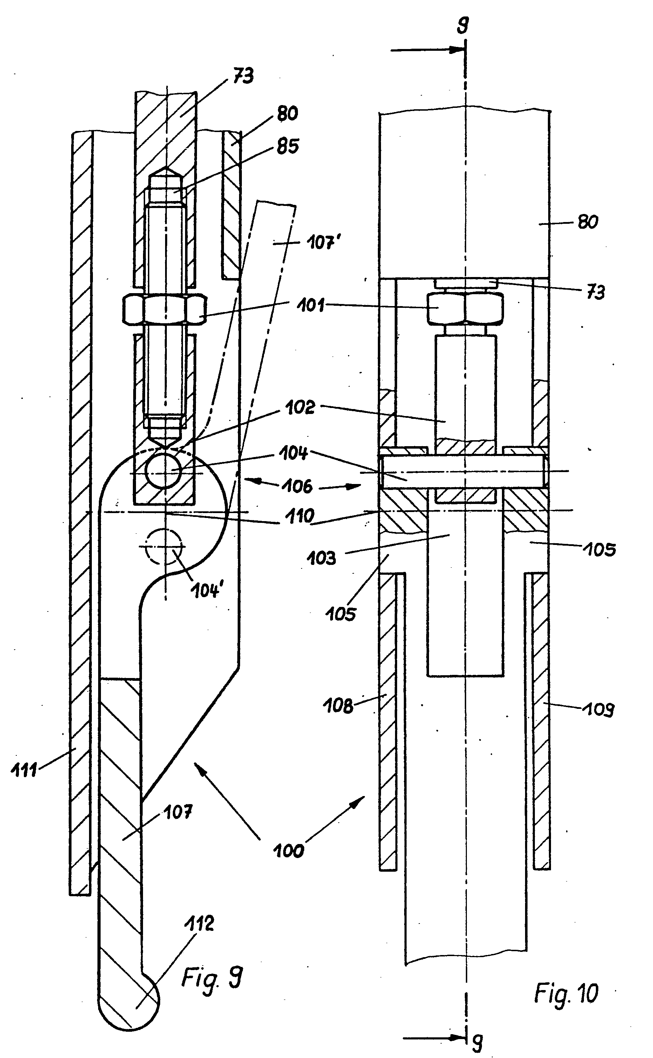

Die Fig. 9 und 10 zeigen ein weiteres Aus-führungsbeispiel für eine Handschwenkhebel-betätigungseinrichtung 100, welche form-schlüssig an die Betätigungsstange 73 angreift. Hier ist in die Bohrung 85 der Betätigungsstange 73 eine mit Rechts- und Linksgewinde versehene Doppelgewindeeinstellschraube 101 eingesetzt, die auf ihrem anderen Gewindeteil ein Lagerstück 102 trägt, welches in einen Spalt 103 des Handschwenkhebels eingreift und mit Hilfe eines Bolzens 104 exzentrisch in den kreis-zylindrischen Lagerscheiben 105 der Hand-schwenkhebellagerung 106 befestigt ist. Die Lagerscheiben 105 sind an den Handschwenkhebel 107 seitlich angeformt und liegen in den entsprechend geböhrten Lagerwangen, und zwar einer linken Lagerwange 108 und einer rechten Lagerwange 109, so daß der Handschwenkhebel um die Mittelachse 110 verschwenkbar ist. Er liegt hier, wie aus Fig. 9 ersichtlich, weit hinten in dem Gehäuse in unmittelbarer Näher der Rückwand 111, steht unten geringfügig über und hat eine Griffkuppel 112, so daß er gut angefaßt und die in Fig. 9 strichpunktierte Position geschwenkt werden kann. Dabei wird der Lagerbolzen 104 wegen seiner Exzentrizität in die in Fig. 9 mit 104′ dargestellte Position gebracht, so daß die Betätigungsstange 73 nach unten gezogen wird. Da es sich hier um eine formschlüssige und genau einstellbare Kupplung zwischen Handhebel, Handhebellager und Betätigungsstange 73 handelt, kann bei einer formschlüssigen Verbindung des oberen Endes der Betätigungsstange 73 mit dem Winkeldruckstück 63 oder einem anderen Winkelhebel auf einen Anschlag im oberen Bereich verzichtet werden, obwohl dieser auch zusätzlich vorgesehen werden könnte. Auch diese Anordnung baut sehr klein, kann klapperfrei gut eingestellt und leicht betätigt werden; die Lagerung kann auch anders gelöst werden. Die vorstehend beschriebene Anordnung nimmt jedoch sehr wenig Raum in der Breite und in der Tiefe ein, weil das Lagerstück 102 zwischen die Lagerscheiben 105 greift.

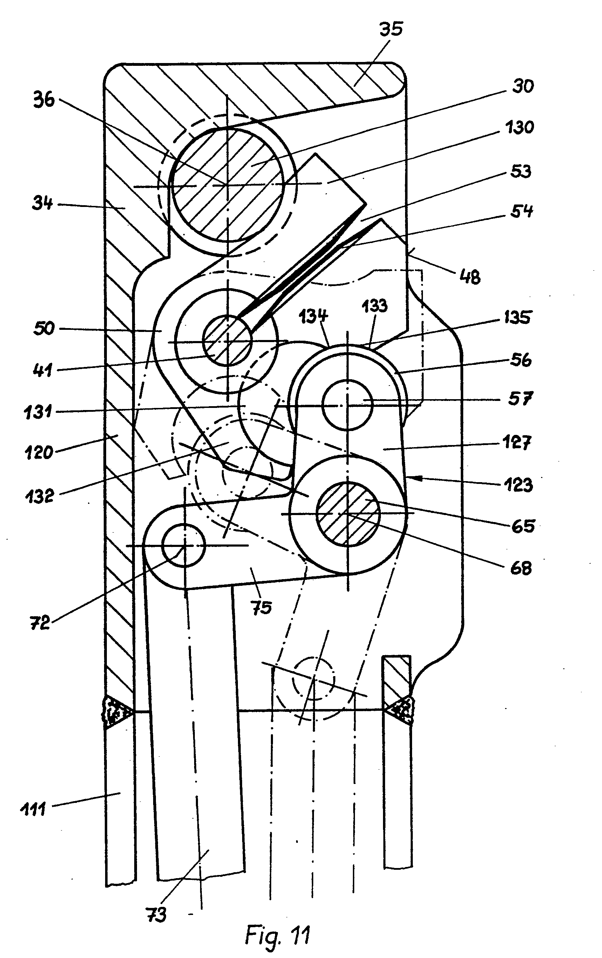

Die Fig. 11 zeigt ein weiteres Ausführungsbeispiel für den oberen Bereich der Verschlußvorrichtung. Hier ist nur ein der Fig. 3 entsprechender Schnitt dargestellt; der unter 90° dazu liegende Schnitt ist dem der Fig. 6 ähnlich. Es werden nun nur noch zu den bisher beschrie-benen Elementen unterschiedliche Elemente be-sprochen. Das Gehäuse ist geringfügig anders gestaltet und hat eine zur Ladefläche weisende Gehäusewand 120, die in die Rückwand 111 übergeht. Die Lagerungen und Druckkraftübertragungspunkte liegen etwa gleich, nur ist hier

**0 001 112**

an Stelle des Winkeldruckstückes des ersten Ausführungsbeispieles ein ausgeprägter Winkelhebel 123 schwenkbar vorgesehen, der mit der Betätigungsstange 73 über ein Bolzengelenk zug- und druckfest gekoppelt ist. Die Angriffsachse 72 des Bolzengelenks liegt etwas unterhalb der Höhenlage der Lagerachse 65, in der ausgezogen dargestellten Verriegelungsstellung. Der nach oben ragende Arm 127 trägt hier die Rolle 56, die mit einem Bolzen 57 drehbar in dem nach oben ragenden Winkelhebelarm 127 gelagert ist. Das ansonsten im Aufbau prinzipiell dem zuerst behandelten Schwenkstück gleichende Schwenkstück 130 ist auch mit Schlitze 53 und Tellerfedern 54 sowie Lagerzapfen 41 ausgestattet. Hier liegt der Lagerzapfen 41 jedoch genau senkrecht unter der Mittelachse 36 der Bordwandzapfenendstellung. Das Schwenkstück 130 ist mit einer zur Rolle 56 passenden Mitnahmeausnehmung 131 ausgestattet, die dem Lagerzapfen 41 benachbart liegt und einen unteren Eingriffszapfen 132 innen begrenzt. An die Ausnehmung 130 schließt sich eine Rastvertiefung 133 an, die in der ausgezogen dargestellten Verriegelungsstellung im Eingriff mit der Rolle 56 ist. Dabei ist das Schwenkstück 130 in Anlage am Bordwandzapfen 30, und dieser wiederum in Anlage am Gegenlager 34. Der größte Abstand der Rolle 56 von der Schwenkachse 68 des Winkelhebels 123 hat in dieser Rastvertiefung die weiter nach unten zu liegende Ecke 134, in welcher die größte Druckkraft ausgeübt wird, geringfügig überschritten und wird zwischen dieser Ecke 134 und der Rastvertiefungsbegrenzungsecke 135 festgehalten, so daß diese Stellung verriegelt ist. Wird die Betätigungsstange 73, wie strichpunktiert dargestellt, nach unten gezogen, so verschwenkt sich der Winkelhebel 123 in die strichpunktierte Lage. Dabei gelangt die Rolle 56 durch die Ausnehmung 131 und rollt auf dem Mitnahmezapfen 132 ab, so daß das Schwenkstück 130 in die strichpunktiert gezeichnete.

Lage bewegt wird und der Bordwandzapfen 30 freigegeben ist. Beim Zurückbewegen wird auch ein nicht ganz in die Endlage gebrachter Bordwandzapfen von dem Schwenkstück in diese hineingedrückt. Die Elastizitäts- und Druckkraftabstützungswirkungen sind denen des zuvor beschriebenen Ausführungsbeispieles gleich bzw. sehr ähnlich. Auch hier ist ein Totpunkt überschritten, und es werden die Druckkräfte durch geschickte Anordnung der Lagerpunkte und Angriffspunkte über die Lagerachse 65 direkt abgestützt, so daß nur die tangentialen Schalt- und Verspannkräfte über die Betätigungsstange 73 aufgebracht zu werden brauchen. Die Endlage könnte zusätzlich zur Sicherheit mit einem Anschlag gesichert sein, was jedoch nicht notwendig ist. Die Zug- und Druckbetätigung der Betätigungsstange 73 kann durch Handhebelkonstruktionen, wie sie in den Fig. 7—10 behandelt sind, oder durch andere ähnliche Betätigungselemente erfolgen.

Eine weitere Besonderheit des erfindungsgemäßen Verschlusses ist, daß er quadratsäulenförmige Auaßengestalt von etwa 40 mm × 40 mm besitzt und somit an einer Eckrunge ohne aufzutragen unter 90° zueinander versetzt angeordnet werden kann, weil er in Tiefe T und Breite gleiche Abmessungen wie eine übliche Bordwanddicke besitzt. Der erfindungsgemäße Verschluß ist durch seine sinnreiche Konstruktion so klein geworden, daß er auch umgekehrt zu der beschriebenen Anordnung angeordnet werden kann, indem nämlich der als Bordwandzapfen 30 bezeichnete Zapfen an der Runge 26 befestigt und der gesamte Verschlußmechanismus and der Seitenkante der Bordwand 22 befestigt wird. Eine solche kinematische Umkehrung liegt auch im Rahmen des Erfindungsgedankens. Dabei ist dann die Öffnung des Gegenlagers zur Ladefläche hin gerichtet.

Bezugszeichenliste

| | |
|---|---|
| 20 | Verschlußvorrichtung |
| 21 | Bordwandseitenkante |
| 22 | Bordwand |
| 23 | Bodenteil |
| 24 | Rad |
| 25 | Scharniere |
| 26 | Mittelrunge |
| 27 | Halterung |
| 28 | Ladefläche |
| 29 | |
| 30 | Bordwandzapfen |
| 31 | Bordwandzapfenspitze |
| 32 | doppelkegelförmige Nut |
| 33 | Schulter |
| 34 | Gegenlager |
| 35 | Deckwand |
| 36 | Mittelpunkt der Bordwandzapfenendstellung |
| 37 | Betätigungsstangenöffnung |
| 38 | |
| 39 | |
| 40 | Schwenkstück |
| 41 | Lagerzapfen |
| 42 | linke Seitenwand |
| 43 | rechte Seitenwand |
| 44 | Verschlußvorrichtungsgehäuse |
| 45 | hinten liegender Quersteg |
| 46 | vorne liegender Quersteg |
| 47 | Anschlag |
| 48 | Außenkante |
| 49 | vordere Begrenzungskante |
| 50 | abgerundeter Lagerbereich |
| 51 | innere Begrenzungskante |
| 52 | |
| 53 | Schlitz |
| 54 | Tellerfeder |
| 55 | Druckkraftübertragungsbereich |
| 56 | drehbare Rolle |
| 57 | Bolzen |
| 58 | Achse |
| 59 | Nockenfortsatz |

| | |
|---|---|
| 60 | Nockenbegrenzungskante |
| 61 | Eingriffausnehmung |
| 62 | Rückziehnocken |
| 63 | Winkeldruckstück |
| 64 | Nockenfläche |
| 65 | Lagerachse |
| 66 | |
| 67 | Winkeldruckstückteil |
| 68 | Drehachse |
| 69 | Druckkraftübertragungsstelle |
| 70 | Kurvenbahn |
| 71 | |
| 72 | Angriffsachse |
| 73 | Betätigungsstange |
| 74 | Gabelkopf |
| 75 | Hebelarm |
| 76 | |
| 77 | |
| 78 | Anlagekante |
| 79 | Kontermutter |
| 80 | Betätigungsstangengehäuse |
| 81 | Handschwenkhebelbereich |
| 82 | Federlager |
| 83 | Federauflagescheibe |
| 84 | Druckschraubenfeder |
| 85 | Gewindebohrung |
| 86 | Sechskantkopfeinstellschraube |
| 87 | Nocken |
| 88 | Handschwenkhebel |
| 89 | Lagerrohr |
| 90 | linker Lagerbock |
| 91 | rechter Lagerbock |
| 92 | Langloch |
| 93 | |
| 94 | Handgriff von 88 |
| 95 | hintere Ansatzstelle |
| 96 | vertikal liegender Griffteil |
| 97 | Anlageabwinkelung |
| 98 | |
| 99 | |
| 100 | Handschwenkhebelbetätigungseinrichtung |
| 101 | Doppelgewindeeinstellschraube |
| 102 | Lagerstück |
| 103 | Spalt |
| 104 | Bolzen |
| 105 | Lagerscheibe |
| 106 | Handschwenkhebellagerung |
| 107 | Handschwenkhebel mit Spalt |
| 108 | linke Lagerwange |
| 109 | rechte Lagerwange |
| 110 | Mittelachse |
| 111 | Rückwand |
| 112 | Griffkuppe |
| 120 | Gehäusewand |
| 123 | Winkelhebel |
| 127 | Winkelhebelarm |
| 130 | Schwenkstück mit Tellerfeder schlite |
| 131 | Mitnahmeausnehmung |
| 132 | Eingriffszapfen |
| 133 | Rastvertiefung |
| 134 | nach unten liegende Ecke |
| 135 | Rastvertiefungsbegrenzungsecke |
| | |
| E | Ebene |

| | |
|---|---|
| A | Abstand |
| R | Radius |
| B | Bordwandzapfenbewegungsbahn |
| T | Tiefe |

**Patentansprüche**

1. Verschlußvorrichtung (20) für pendel- und/oder klappbare Bordwände (22) von Lastfahrzeugen, insbesondere Lastkraftwagen und deren Anhänger, mit einem an der oberen Ecke der Bordwand parallel zu deren Schwenkachse angeordneten Bordwandzapfen (30), der in einem den Bordwandzapfen (30) teilweise umgreifenden in Richtung der Bordwandzapfenbewegungsbahn (B) offenen Gegenlager (34) durch ein unterhalb der Bordwandzapfenendstellung gelagertes, nach unten wegschwenkendes verriegelbares Schwenkstück (40, 130) gehalten ist, dessen Betätigungselemente in dem Raum zwischen der Bordwandseitenkante (21) und der beim Verschwenken von der Bordwandzapfenspitze (31) beschriebenen Ebene untergebracht sind, ein auf das Schwenkstück (40, 130) unmittelbar drückendes Betätigungsorgan und eine eine Totlage geringfügig überschreitende Verriegelungseinrichtung aufweisen, dadurch gekennzeichnet, daß eine im wesentlichen vertikal bewegte Betätigungsstange (73) vorgesehen ist und das Betätigungsorgan als Winkelhebel (123) oder Winkeldruckstück (63) ausgebildet ist, welcher bzw. welches eine weit nach der Außenkante des Fahrzeuges zu liegende Lagerachse (65) und einen nach oben ragenden, auf das Schwenkstück (40, 130) drückenden Winkeldruckstückteil (67) oder Winkelhebelarm (127) aufweist und dessen Angriffsachse (72) für die Betätigungsstange (73) in der Verriegelungsstellung etwa auf Höhe der Lagerachse (65) im Abstand von dieser in Richtung auf die Ladefläche (28) zu versetzt liegt.

2. Verschlußvorrichtung nach Anspruch 1, dadurch gekennzeichnet, daß am Schwenkstück (40, 130) und Winkelhebel (123) bzw. Winkeldruckstück (63) Eingriffelemente (131, 132, 56; 59, 62) für das Zurückziehen des Schwenkstückes (40, 130) vorgesehen sind.

3. Verschlußvorrichtung nach Anspruch 1 oder 2, dadurch gekennzeichnet, daß am Schwenkstück (40, 130) oder Winkelhebel (123) bzw. Winkeldruckstück (63) im Bereich der Druckkraftübertragungsstelle eine drehbare Rolle (56) angeordnet ist.

4. Verschlußvorrichtung nach einem oder mehreren der vorangehenden Ansprüche, dadurch gekennzeichnet, daß die Druckkraftübertragungsstelle am Schwenkstück (130) oder Winkelhebel (123) bzw. Winkeldruckstück (63) mit einer in der Verriegelungsstellung im Eingriff befindlichen Rastvertiefung (133) ausgestattet ist.

5. Verschlußvorrichtung nach einem oder mehreren der vorangehenden Ansprüche, dadurch gekennzeichnet, daß Winkelhebel (123) bzw. Winkeldruckstück (63) geringfügig über die Stellung hinaus bewegbar ist, in welcher die den größten Abstand (R) von der Drehachse (68) der Lagerachse (65) aufweisende Druckkraftübertragungsstelle (69) des Winkelhebels (123) bzw. Winkeldruckstückes (63) das Schwenkstück (40, 130) an den am Gegenlager (34) anliegenden Bordwandzapfen (30) andrückt, und ein Anschlag (47, 135) für die Begrenzung der Schwenkbewegung des Winkelhebels (123) bzw. Winkeldruckstücks (63) in der Verriegelungsstellung vorgesehen ist.

6. Verschlußvorrichtung nach einem oder mehreren der vorangehenden Ansprüche, dadurch gekennzeichnet, daß die Betätigungsstange (73) im Bereich ihres unteren Endes mit einem Handschwenkhebel (88, 107) gekuppelt ist.

7. Verschlußvorrichtung nach einem oder mehreren der vorangehenden Ansprüche, dadurch gekennzeichnet, daß die Betätigungsstange (73) mit einer Feder (84) nach unten gedrückt wird.

8. Verschlußvorrichtung nach Anspruch 7, dadurch gekennzeichnet, daß der Handschwenkhebel (88) mit einem Exzenter oder Nocken (87) ausgestattet ist, auf welchem die Betätigungsstange (73) unter der Kraft der Feder (84) aufliegt.

9. Verschlußvorrichtung nach einem oder mehreren der vorangehenden Ansprüche, dadurch gekennzeichnet, daß die Betätigungsstange (73) eine Längeneinstellschraube (86, 101) aufweist.

10. Verschlußvorrichtung nach einem oder mehreren der vorangehenden Ansprüche, dadurch gekennzeichnet, daß die Betätigungsstange (73) vorzugsweise über ein Bolzengelenk mit dem Winkelhebel (123) bzw. Winkeldruckstück (63) zug- und druckfest gekoppelt ist.

11. Verschlußvorrichtung nach einem oder mehreren der vorangehenden Ansprüche, dadurch gekennzeichnet, daß der Handschwenkhebel (88, 107) mittelbar mit dem Winkelhebel (123) bzw. Winkeldruckstück (63) formschlüssig gekoppelt ist.

12. Verschlußvorrichtung nach einem oder mehreren der vorangehenden Ansprüche, dadurch gekennzeichnet, daß die Außengestalt des Verschlußvorrichtungsgehäuses (44) eine Säule mit quadratischem Querschnitt ist.

13. Verschlußvorrichtung nach einem oder meheren der vorangehenden Ansprüche, dadurch gekennzeichnet, daß die Außenabmessungen des Verschlußvorrichtungsgehäuses (44) 40 mm betragen.

14. Verschlußvorrichtung nach einem oder mehreren der vorangehenden Ansprüche, dadurch gekennzeichnet, daß der Bolzen (30) an der Runge (26) und die Verschlußvorrichtung (20) an der Bordwand (22) befestigt sind.

**Claims**

1. A fastening device (20) for swinging and/or hinged tailgates (22) of freight-carrying vehicles, in particular lorries and their trailers, having a tailgate pin (30) which is disposed on the upper corner of the tailgate parallel to the pivoting axis thereof and is held in an outer seat (34) partially surrounding the said tailgate pin (30) and open in the direction of the path of travel (B) of the tailgate pin by means of a lockable pivoting member (40, 130), which is disposed beneath the end position of the tailgate pin and can be pivoted away downwards and the actuating elements of which are situated in the space between the lateral edge (21) of the tailgate and the plane described by the tip (31) of the tailgate pin when pivoting, and have an actuating means pressing directly against the pivoting member (40, 130) and a locking device going slightly beyond a dead centre characterised in that an actuating rod (73) which is moved essentially vertically is provided and the actuating means is in the form of an angled lever (123) or an angled thrust member (63), which has a bearing shaft (65) to be positioned close to the outside edge of the vehicle and an angled thrust member part (67) or angled lever arm (127) projecting upwards and pressing against the pivoting member (40, 130), and the axis of application (72) for the actuating rod (73) lies, in the locking position, approximately at the level of the bearing shaft (65) and offset at a distance from the latter towards the load platform (28).

2. A fastening device according to claim 1, characterised in that engagement elements (131, 132, 56; 59, 62) for drawing back the pivoting member (40, 130) are provided on the pivoting member (40, 130) and on the angled lever (123) or angled thrust member (63).

3. A fastening device according to claim 1 or 2, characterised in that a rotatable roller (56) is disposed on the pivoting member (40, 130) or on the angled lever (123) or angled thrust member (63) in the region of the thrust transmission point.

4. A fastening device according to one or more of the preceding claims, characterised in that the thrust transmission point on the pivoting member (130) or on the angled lever (123) or angled thrust member (63) is provided with a detent recess (133) which engages in the locking position.

5. A fastening device according to one or more of the preceding claims, characterised in that the angled lever (123) or angled thrust member (63) can be moved slightly beyond the position in which the thrust transmission point (69) of the angled lever (123) or angled thrust member (63) at the greatest distance (R) from the pivoting axis (68) of the bearing shaft (65) presses the pivoting member (40, 130) and the tailgate pin (30) resting against the outer seat (34), and a stop (47, 135) is provided for limiting the pivoting movement of the angled lever (123) or angled thrust member (63) in the locking position.

6. A fastening device according to one or more of the preceding claims, characterised in that in the region of its lower end the actuating rod (73) is connected to a manual pivoting lever (88, 107).

7. A fastening device according to one or more of the preceding claims, characterised in that the actuating rod (73) is pressed downwards by a spring (84).

8. A fastening device according to claim 7, characterised in that the manual pivoting lever (88) is provided with an eccentric or cam (87) against which the actuating rod (73) bears under the action of the spring (84).

9. A fastening device according to one or more of the preceding claims, characterised in that the actuating rod (73) has a longitudinal adjusting screw (86, 101).

10. A fastening device according to one or more of the preceding claims, characterised in that the actuating rod (73) is connected to the angled lever (123) or angled thrust member (63) rigidly with respect to tension and thrust, preferably by way of a pin joint.

11. A fastening device according to one or more of the preceding claims, characterised in that the manual pivoting lever (88, 107) is indirectly connected in a positive manner to the angled lever (123) or the angled thrust member (63) respectively.

12. A fastening device according to one or more of the preceding claims, characterised in that the fastening device casing (44) is shaped externally as a column with a square cross-section.

13. A fastening device according to one or more of the preceding claims, characterised in that the external dimensions of the fastening device casing (44) are 40 mm.

14. A fastening device according to one or more of the preceding claims, characterised in that the pin (30) is secured to the stanchion (26) and the fastening device (20) is secured to the tailgate (22).

## Revendications

1. Dispositif de fermeture (20) pour ridelles (22) oscillantes et/ou rabbatables de véhicules utilitaires, en particulier de camions ou de leurs remorques, dispositif comprenant: une cheville ou tenon (30) qui est disposé parallèlement à l'axe de pivotement de la ridelle sur un angle supérieur de la ridelle et qui est maintenu dans un arrêtoir (34), lequel entoure le tenon (30) partiellement et s'ouvre en direction du trajet de mouvement (B) du tenon porté par la ridelle, par une pièce basculante ou cliquet (40, 130) monté sous le tenon en position extrême de fermeture et susceptible de basculer vers le bas et d'être verrouillé, les éléments de commande de ce cliquet étant logés dans l'espace compris entre le bord latéral (21) de la ridelle et le plan (E) contenant le trajet de mouvement de l'extrémité ou la pointe (31) du tenon lors du pivotement de la ridelle, et comportant un organe de commande exerçant directement une pression sur le cliquet (40, 130), ainsi que des moyens de verrouillage dépassant légèrement une position de point mort, caractérisé en ce qu'il comprend une barre de commande (73) déplaçable essentiellement dans le sens vertical et en ce que l'organe de commande est un levier coudé (123) ou une pièce coudée ou en équerre de pression (63) qui est monté basculant autour d'un axe (65) déporté loin vers le côté extérieur du véhicule et est pourvu d'une partie angulaire de pression (67) ou d'un bras de levier coudé (127) s'étendant vers le haut et exerçant une pression sur le cliquet (40, 130) et dont l'axe d'attaque (72) pour la barre de commande (73) est situé, en position de verrouillage, à peu près à la hauteur de l'axe de basculement (65) mais décalé de celui-ci en direction de la surface de chargement (28).

2. Dispositif de fermeture selon la revendication 1, caractérisé en ce que des éléments de contact (131, 132, 56; 59, 62) pour le rappel du cliquet (40, 130) sont prévus sur le cliquet (40, 130) et sur le levier coudé (123) respectivement la pièce coudée de pression (63).

3. Dispositif de fermeture selon la revendication 1 ou 2, caractérisé en ce qu'un galet rotatif (56) est disposé dans la zone du point de transmission d'effort de pression sur le cliquet (40, 130) ou le levier coudé (123) respectivement la pièce coudée de pression (63).

4. Dispositif de fermeture selon une ou plusieurs des revendications précédentes, caractérisé en ce que le point de transmission d'effort de pression sur le cliquet (130) ou sur le levier coudé (123) respectivement la pièce coudée de pression (63) présente un cran d'arrêt (133) utilisé en position de verrouillage.

5. Dispositif de fermeture selon une ou plusieurs des revendications précédentes, caractérisé en ce que le levier coudé (123) respectivement la pièce coudée de pression (63) est déplaçable légèrement au-delà de la position où le point de transmission d'effort de pression (69) de ce levier ou de cette pièce présentant la distance maximale de l'axe de rotation (68) de l'axe de basculement (65) presse le cliquet (40, 130) contre le tenon (30) appliqué contre l'arrêtoir (34), et en ce qu'une butée (47, 135) est prévue pour limiter le basculement du levier coudé (123) ou de la pièce coudée de pression (63) dans la position de verrouillage.

6. Dispositif de fermeture selon une ou plusieurs des revendications précédentes, caractérisé en ce que la barre de commande (73) est accouplée dans la zone de son extrémité inférieure avec un levier à relevable et abaissable (88, 107).

7. Dispositif de fermeture selon une ou plusieurs des revendications précédentes, caractérisé en ce que la barre de commande (73) est poussée vers le bas par un ressort (84).

8. Dispositif de fermeture selon la revendication 7, caractérisé en ce que le levier à main (88) est pourvu d'un excentrique ou came (87), contre lequel la barre de commande (73) est appliquée sous la force du ressort (84).

9. Dispositif de fermeture selon une ou plusieurs des revendications précédentes, caractérisé en ce que la barre de commande (73) présente une vis de réglage de longueur (86, 101).

10. Dispositif de fermeture selon une ou plusieurs des revendications précédentes, caractérisé en ce que la barre de commande (73) est accouplée en traction et en poussée au levier coudé (123) respectivement à la pièce coudée de pression (63) de préférence par un axe d'articulation.

11. Dispositif de fermeture selon une ou plusieurs des revendications précédentes, caractérisé en ce que le levier à main (88, 107) est accouplé indirectement au levier coudé (123) respectivement à la pièce coudée de pression (63) par une liaison par sûreté de forme.

12. Dispositif de fermeture selon une ou plusieurs des revendications précédentes, caractérisé en ce que la forme extérieure du boîtier (44) du dispositif de fermeture correspond à celle d'une colonne de section carrée.

13. Dispositif de fermeture selon une ou plusieurs des revendications précédentes, caractérisé en ce que le boîtier (44) du dispositif de fermeture extérieurement 40 mm de côté.

14. Dispositif de fermeture selon une ou plusieurs des revendications précédentes, caractérisé en ce que le tenon (30) est fixé au montant (26) et le dispositif de fermeture (20) est fixé à la ridelle (22).

0 001 112

Fig. 1

Fig. 2

1

Fig. 3

Fig. 4

Fig. 5

Fig. 6

0 001 112

Fig. 7

Fig. 8

Fig. 9

Fig. 10

Fig. 11